# EUROPEAN PATENT APPLICATION

(11) **EP 2 341 604 A1**
(43) Date of publication of application: **06.07.2011**
(21) Application number: 09252934.6
(22) Date of filing: 31.12.2009
(51) Int. Cl.: H02M 3/158, H02M 1/42

(54) **A power factor correction stage**

(71) Applicant: NXP B.V., 5656 AG Eindhoven (NL)
(72) Inventor: Pansier, Frans, Redhill Surrey RH1 1DL (GB); Duerbaum, Thomas Antonius, Redhill Surrey RH1 1DL (GB); Schmid, Markus, Redhill Surrey RH1 1DL (GB); Mühlbauer, Klaus, Redhill Surrey RH1 1DL (GB); Kuebrich, Johann Baptist Daniel, Redhill Surrey RH1 1DL (GB)
(74) Representative: Hardingham, Christopher Mark

(57) **Abstract**

A power factor correction stage comprising an input terminal configured to receive an input signal, an output terminal configured to provide an output signal, a first converter stage (510) and one or more further converter stages (512). Each of the converter stages (510, 512) is connected to the input terminal and the output terminal and comprises a switch (522, 524). The power factor correction stage also comprises a controller (528) configured to operate the switches (522, 524) of the converter stages (510, 512), wherein the controller (528) is configured to operate the switch (524) of the one or more further converter stages (512) at a period of time after operation of the switch (522) of the first converter stage (510), wherein the period of time is independent of the switching frequency of the first converter stage (510).

## Description

The present disclosure relates to the field of power factor correction stages, and particularly, although not exclusively, interleaved power factor correction (PFC) stages.

It is known to use a power factor correction (PFC) stage in devices that receive a mains voltage. Such a PFC can be used in order to comply with requirements of harmonic currents drawn from a single phase power supply.

It is known to use two interleaved boost converters, whereby the switch of the second boost converter is operated by a control signal which is 180° out of phase with a control signal that is used to operate the switch of the first boost converter.

Known converters may require a large electromagnetic interference (EMI) filter, which can consist of differential and common mode chokes and capacitors, in order to ensure that the EMI generated by the PFC is kept below certain values. There may also be power limitations associated with known PFC's, when they are used with high power devices such as servers.

The listing or discussion of a prior-published document or any background in the specification should not necessarily be taken as an acknowledgement that the document or background is part of the state of the art or is common general knowledge.

According to a first aspect of the invention, there is provided a power factor correction stage comprising:
an input terminal configured to receive an input signal;
an output terminal configured to provide an output signal;
a first converter stage and one or more further converter stages, wherein each of the converter stages is connected to the input terminal and the output terminal, and each converter stage comprises a switch; and
a controller configured to operate the switches of the converter stages;
   wherein the controller is configured to operate the switch of the one or more further converter stages at a period of time after operation of the switch of the first converter stage, wherein the period of time is independent of the switching frequency of the first converter stage.

It has been found that operating the switch of the one or more further converter stages at a period of time after the switch of the first converter stage, wherein the period of time is independent of the switching frequency of the first converter stage, can provide an improved performance over prior art power factor correction stages/switched mode power supplies (SMPS's) where the switches of the converter stages are operated at instances of time corresponding to equal divisions of a switching frequency. The improvement in performance can be in terms of an increased efficiency and/or decreased EMI emissions. A decrease in EMI emissions can, in turn, lead to a reduction in the requirements of an EMI filter thereby decreasing the number of components and/or physical size required for a power factor correction stage/SMPS and associated circuitry.

It will be appreciated that the functionality of the controller may be provided by a single component/module, or may be distributed over a number of components/modules.

The controller may be configured to operate the first converter stage in a variable switching frequency mode of operation, which may be a boundary conduction mode of operation. In some examples, the controller may be configured to operate the first converter stage in a fixed switching frequency mode of operation such that the fixed switching frequency is either periodically or randomly adjusted. Such examples can be advantageous in terms of a requirement for EMI filtering (see M. Albach, (1986) Conducted interference voltage of ac-dc converters IEEE Power Electronics Specialists Conference PESC, Vancouver, Canada, p. 203 - 212). Such a mode of operation may still be referred to as a fixed frequency mode of operation since the applied control resembles that of fixed frequency PWM operation.

An SMPS may comprise any power factor correction stage/circuit (PFC) disclosed herein, and the converter stages may comprise power factor correction stages. The SMPS may be a DC to DC converter or an AC to DC converter. The converter stages may comprise boost converters, buck converters, buck-boost converters, sepic converters, zeta converters, cuk converters, flyback converters, and/or forward converters, as non-limiting examples.

The controller may be configured to operate the switch of the first converter stage in accordance with a required output level. That is, the "time-on" value of the switch and/or the switching frequency and/or any other characteristic of the power factor correction stage/SMPS may be automatically controlled by the controller in order to provide a required output signal level.

The first converter stage and one or more further converter stages may be considered as interleaved converter stages.

There may be provided a controller for a power factor correction stage/SMPS, the controller being configured to deactivate one or more of the converter stages if a required output level falls below a threshold value. Deactivating a converter stage may comprise not sending a control signal to operate a switch of the converter stage. Deactivating a converter stage can improve the performance of the power factor correction stage/SMPS as each of the "activated" converter stages operating at a first power level can be more efficient than all of the converter stages operating at a second, lower, power level.

The converter stages may be configured for performance (such as maximum efficiency or other optimal/preferred performance) at specific power output levels. The controller may be configured to deactivate a specific one or more of the converter stages in accordance with a comparison between a required output level and the performance of the converter stages at specific power levels. The specific power output levels may be different for different converter stages of the power factor correction stage/SMPS.

The switched mode power supply may further comprise an electromagnetic interference (EMI) filter. In some embodiments, the requirements of the EMI filter can be reduced when compared with the prior art, which can lead to a saving in terms of physical volume occupied by the EMI filter and efficiency of operation.

There may be provided an integrated circuit comprising the control functionality of any power factor correction stage or switched mode power supply disclosed herein.

There may be provided a personal computer, television, monitor, or any other electrical device comprising any power factor correction stage or switched mode power supply or integrated circuit disclosed herein.

According to a further aspect of the invention, there is provided a method of operating an interleaved power factor correction stage/switched mode power supply, the method comprising:
operating a switch of a first converter stage ; and
operating a switch of one or more further converter stages at a period of time after operation of the switch of the first converter, wherein the period of time is independent of the switching frequency of the first converter stage.

Operating the switch of the first converter stage may comprise:
operating the switch of the first converter stage such that the combined output of the first converter stage and the one or more further converter stages provides a required output level.

There may be provided a method of operating an interleaved power factor correction stage/switched mode power supply, the method comprising:
deactivating one or more further converter stages if a required output level falls below a threshold value.

There may be provided a computer program, which when run on a computer, causes the computer to configure any apparatus, including a power factor correction stage, switched mode power supply, integrated circuit, circuit, system, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

A description is now given, by way of example only, with reference to the accompanying drawings, in which:
Figure 1 illustrates a block diagram of a power conversion system;
Figure 2 illustrates a block diagram of two parallel interleaved boost converters;
Figure 3 illustrates graphically a variation in switching frequency for a prior art power factor correction circuit operating in BCM;
Figure 4 illustrates graphically operation of a prior art switched mode power supply;
Figure 5 illustrates a switched mode power supply according to an embodiment of the invention;
Figure 6 illustrates graphically operation of a switched mode power supply according to an embodiment of the invention;
Figure 7 illustrates graphically currents flowing through a circuit during operation of an embodiment of the invention;
Figure 8 illustrates graphically the minimum inductance that is required to satisfy EMI requirements for operation of a switched mode power supply with different time intervals according to an embodiment of the invention; and
Figure 9 illustrates graphically a comparison between operation of embodiments of switched mode power supplies according to embodiments of the invention, and the prior art.

One or more embodiments described herein relate to an interleaved boost converter, which can comprise two or more boost converters in parallel, whereby the switch of the second (and any subsequent) boost converters is operated at a delay time after operation of the switch of the first boost converter. The delay time may be independent of the switching frequency of the boost converters. This can be in contrast to the prior art where the operation of all of the switches of the interleaved boost converter are spaced equally throughout a switching cycle.

One or more embodiments described herein are based on the finding that the performance of an interleaved power factor correction (PFC) circuit can be improved by utilising a fixed delay time between the operation of switches in the interleaved PFC circuit. For example, the performance can be improved in terms of efficiency, and/or a decrease in the amount of electromagnetic interference (EMI) that is generated by operation of the interleaved PFC circuit. This can lead to a reduction in the size of an EMI filter that is required, and size reductions can be particularly important for personal computers, for example.

In order to comply with requirements of harmonic currents that are drawn from a single phase line, such as a mains voltage supply, it is known for a power factor correction (PFC) stage to be used. The PFC stage can be active, passive, or a single stage. An active PFC stage is typically used for medium and high power applications, and a single boost PFC is typically used for the power ranges that are required for television sets and monitors, as well as desktop personal computers (PC's). In such examples, the single boost PFC stage can be used in boundary conduction mode (BCM), whereby the conductor current of the PFC starts from zero for every switching cycle, reaches twice the required average current, and then falls down to zero again to start the next switching cycle.

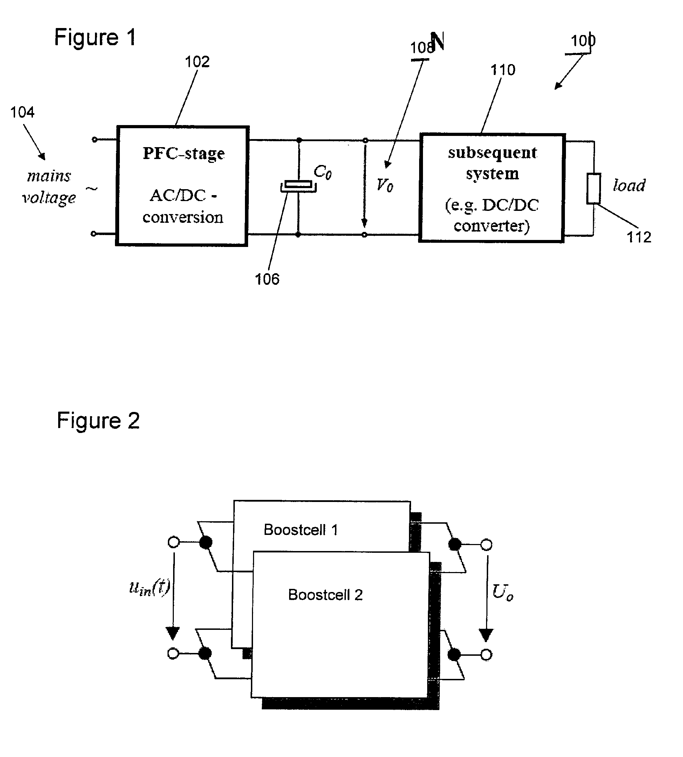

Figure 1 illustrates schematically a block diagram of a power conversion system 100 comprising a power factor correction stage 102.

The power factor correction circuit 100 of Figure 1 consists of a PFC stage 102, which receives a mains voltage 104. A capacitor 106 is connected across the outputs of the PFC stage 102, such that the smoothed output of the PFC stage 102 is provided as an input voltage 108 to a subsequent system 110 such as a DC/DC converter. The output of the DC/DC converter 110 is connected to a load 112.

The PFC stage 102 can incorporate an input filter, a rectifier and a boost cell. It is known in the art for the boost cell and input filter to occupy a similar amount of space. The filter can consist of differential and common mode filter components whereby the differential filter components can be selected based on the specific topology and operation mode, and the common mode filter components can be determined by the layout and parasitic capacitances of the boost cell.

Figure 2 shows two boost cells provided in parallel in order to increase the efficiency of the PFC stage. At a certain power level, a single boost with one switching element is no longer able to operate efficiently. A first idea to increase efficiency is by decreasing the on-resistance of the active switch due to paralleling of MOSFETs. However, the parallel approach can have limitations when the resistance values drop as low as a few tens of Ohms, as the extra tracks can be responsible for a similar resistance to that of the channel between the drain and source of the MOSFET's, and therefore an overall improvement may not be achieved. Thus a further idea is to parallel complete boost converter cells comprising at least an inductor an active switch and a diode.

It is known to use interleaved boost cells as shown in Figure 2 in DC/DC load converters, and also in AC/DC PFC converters in order to increase the power range that can be handled by the PFC stage 102, for example any MOSFET devices that are present in the PFC stage 102.

M.Albach et *al,* (M. Albach, D. Dambois, (1991) Optimized operation mode for 3 kW offline preconditioner circuits 4th European Power Electronics Conference EPE, Florenz, Italy, vol. 3, p. 134 -139) discloses a 3 kW fixed frequency PFC consisting of two 1.5 kW boost cells working at a frequency of 200 kHz, with a phase shift of 180° between switching operations of the two boost cells. It will be appreciated that a 180° phase shift provides a time delay between the switching of the two boost cells by a period of time that is equal to half the switching period.

It is also known in the art to apply a delay corresponding to a phase of 180° for interleaved boost converters operating in a variable frequency boundary conduction mode (BCM) of operation, as used by Texas Instruments in the BCM interleaved controller UCC28060 ("Natural Interleaving™ DUAL-PHASE TRANSITION-MODE PFC CONTROLLER").

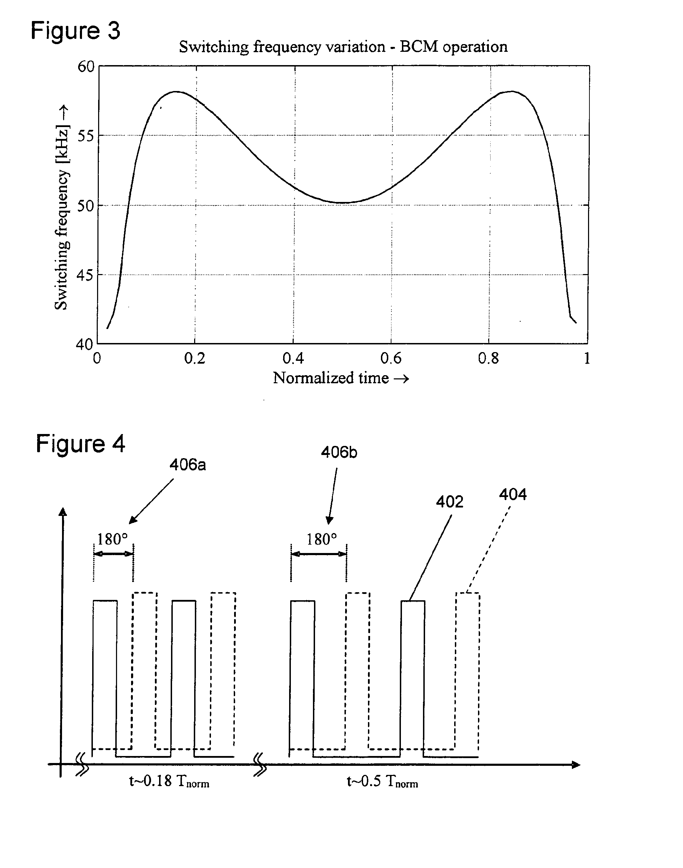

Figure 3 illustrates graphically how the switching frequency for a prior art boost converter operating in BCM varies over a period of time corresponding to 180° of a mains cycle. The time on the horizontal axis shown in Figure 3 has been normalised for ease of illustration, and in Europe corresponds to 10ms (based on a mains frequency of 50Hz). It can be seen that the switching frequency varies over the mains cycle.

Figure 4 illustrates graphically control signals that can be provided to two switches of the prior art boost converters operating in BCM. The control signals illustrated in Figure 4 correspond to the operation of the prior art boost converters over 180° of a mains cycle as shown in Figure 3.

The control signal that is provided to the first boost converter is shown with reference 402 in Figure 4, and the control signal for the second boost converter is shown with reference 404. For ease of illustration, the amplitude of the control signals are normalised, and the control signal 404 for the second boost converter is shifted by a small amount.

For ease of illustration, the control signals of Figure 4 are shown at two time instants within the mains half cycle, and it can be seen that the absolute value for the delay 406a is shorter for a higher switching frequency (at around 0.18 normalised time of Figure 3) than for the delay 406b for the lower switching frequency at the centre of the mains cycle (0.5 normalised time as shown in Figure 3).

Figures 3 and 4 illustrate that, for prior art interleaved boost converters operating in BCM, the absolute value for the delay between operation of switches changes in accordance with the instantaneous switching frequency of the converters.

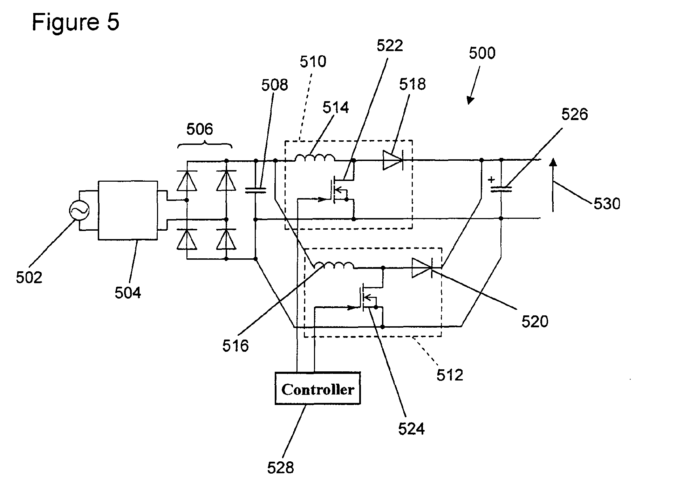

Figure 5 illustrates a switched mode power supply (SMPS) 500 according to an embodiment of the invention.

The SMPS 500 includes a mains input voltage supply 502, that is provided to an input filter 504. The input filter is configured to reduce the EMI radiation of the SMPS 500. The outputs of the input filter 504 are provided to a bridge rectifier 506. A high frequency capacitor 508 is connected between the outputs of the bridge rectifier 506.

Also connected to the outputs of the bridge rectifier 506 are a first boost converter 510 and a second boost converter 512. The first and second boost converters 510, 512 are connected to the outputs of the bridge rectifier 506 in parallel, and such a configuration is known as interleaving boost converters.

The outputs of the first and second boost converters 510, 512 are connected together to provide a common output 530, and an output smoothing capacitor 526 is also coupled between the outputs of the SMPS 500.

As is known in the art, each boost converter 510, 512 comprises an inductor 514, 516 and a diode 518, 520 connected in series between the positive input to the boost converter and the positive output of the boost converter. Also provided as part of the boost converter 510, 512 is a switch, which in this example is a metal oxide semiconductor field effect transistor (MOSFET) 522, 524. The channels of the MOSFET's 522, 524 are connected between the ground rail of the boost converters 510, 512 and the positive rail at a junction between the inductor 514, 516 and the diode 518, 520. The MOSFET's 522, 524 are operated by a controller 528 through the provision of a voltage to the gate of the MOSFET. One or more embodiments of the invention disclosed herein can be considered as being provided by a novel and inventive controller 528.

In this example, the controller 528 is configured to operate the first boost converter 510 in a boundary conduction mode (BCM) of operation, which uses a variable switching frequency in order to provide the required output level. In other examples discontinuous conduction mode (DCM) or continuous conduction mode (CCM) can be used.

In some embodiments, BCM can be considered as more advantageous than DCM or CCM in terms of efficiency and/or EMI emissions. Further advantages associated with BCM can be achieved by operating the first boost converter 510 in BCM with valley skipping or valley switching.

The controller 528 is configured to implement a fixed delay time between operating the switch 522 of the first boost converter 510 and operating the second switch 524 of the second boost converter 512. The fixed time delay can be independent of the switching frequency and "time-on" values for the boost converters 510, 512. Such an embodiment can be considered as easy to implement as the first boost converter 510 can be controlled such that its "time-on" value is set in accordance with a desired output voltage, and the second boost converter 512 can be controlled to follow the operation of the first boost converter 510 with a programmed delay. In this way, the first boost converter 510 may be considered as a master boost cell, and the second boost converter 512 may be considered as a slave boost cell.

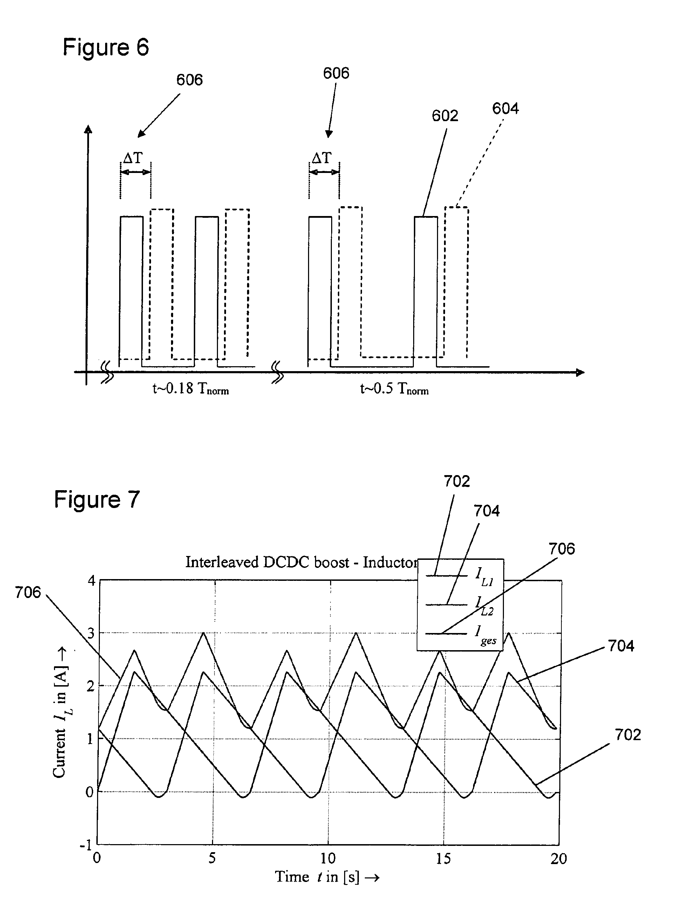

Figure 6 illustrates graphically control signals that can be provided to the two switches 522, 524 of the boost converters 510, 512 operating in variable frequency BCM. As indicated above, in this example the switches 522, 524 are MOSFET's, and therefore the control signals consist of voltage signals that are provided to the gates of the two MOSFET's 522, 524.

The control signal that is provided to the gate of the first MOSFET 522 of the first boost converter is shown with reference 602 in Figure 6, and the control signal for the second MOSFET 524 of the second boost converter 512 is shown with reference 604. For ease of illustration, the control signals are normalised to one, and the control signal 604 for the second MOSFET 524 is shifted by 0.1.

The time axis on the horizontal axis of Figure 6 corresponds to a half mains cycle in a similar way to that illustrated in Figures 3 and 4.

As can be seen from Figure 6, a fixed time delay (ΔT) 406 is applied between the two control signals 602, 604 independently of the switching frequency of the control signals. This is in contrast to the prior art shown in Figure 4, whereby a fixed phase delay of 180° is introduced between control signals for two prior art interleaved boost converters. As discussed above, it will be appreciated that such prior art examples have a variable time delay because the delay varies in accordance with the switching frequency of the boost converters.

Figure 7 illustrates the current flowing through the inductors 514, 516 of the individual boost converters 512, 514 along with a signal representative of the sum of the currents through the two inductors 514, 516. The current through the first inductor 514 of the first boost converter 510 is shown with reference 702 in Figure 7, and generally takes the shape of a sawtooth waveform as the switch 522 of the first boost converter 510 is switched on and off. In this example, the current 702 drops down to zero before beginning to rise again when the switch is operated, and this can be representative of operation in boundary conduction mode (BCM). Similarly, the current through the second inductor 516 of the second boost converter 512 is shown with reference 704 in Figure 7. In some examples, the boost converters can operate in BCM with valley skipping or valley switching as is known in the art. It will be appreciated that in further embodiments still, the boost converters 510, 512 can operate in discontinuous conduction mode (DCM) or continuous conduction mode (CCM), and in some cases the fixed frequency may be periodically or randomly adjusted over time.

The sum of the currents through the two inductors 514, 516 is shown with reference 706 in Figure 7. It will be appreciated that Figure 7 illustrates operation of an interleaved boost converter for DC to DC operation, such that the operation of the controller can be more readily appreciated. The general form of the signals shown in Figure 7 will be the same for interleaved boost converters performing AC to DC operation, although due to the high switching frequency, the shape of the waveforms may not be as readily distinguishable.

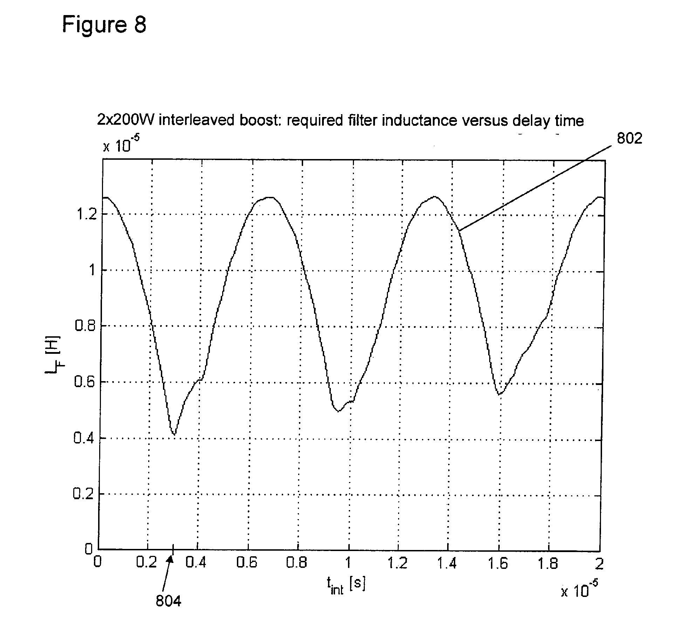

Figure 8 illustrates the minimum inductance that is required as part of the input filter 504 for different fixed time delays between operation of the two switches 522, 524. The required filter inductance L_{F} is shown on the vertical axis of Figure 8, and a range of time intervals are shown on the horizontal axis, in this example ranging between 0 and 20 microseconds. The results that are illustrated in Figure 8 were obtained by performing an experiment on two 200 W interleaved boost converters, and it will be appreciated that similar results can be obtained for boost converters having different power ratings, and/or a different number of boost converters.

As can be seen from Figure 8, the required inductance L_{F} decreases as the time interval is increased from 0, and reaches a minimum value at a time interval of approximately 3.3 microseconds, as indicated in Figure 8 with reference 804. The required inductance L_{F} then increases as the time interval is increased from 3.3 microseconds to about 6.6 microseconds, whereby the required inductance L_{F} begins to fall again.

As can be seen from Figure 8, further minimum turning points in the required inductance L_{F} occur in subsequent switching periods, although the subsequent minimum turning points are not as low as the initial minimum turning point at 3.3 mircroseconds.

The results of Figure 8 indicate that, for the given example, a time interval of 3.3 microseconds between operation of the first and second switches 522, 524 will provide optimal performance as a reduction in the filtering that is performed by the input filter 504 can be achieved, thereby making the input filter 504 smaller.

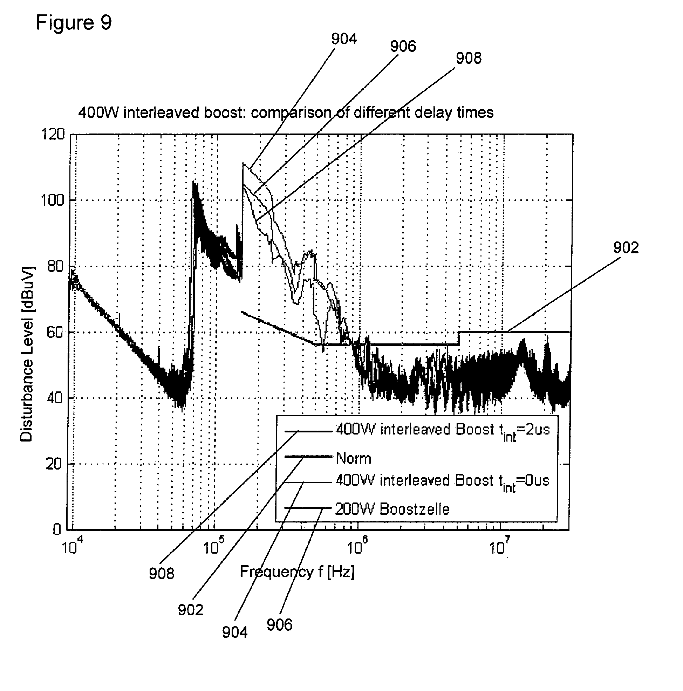

Figure 9 illustrates graphically a comparison between an embodiment of the present invention and the prior art. The graph of Figure 9 illustrates a disturbance level in decibels per microvolt on the vertical axis and a frequency of operation on the horizontal axis.

A reference level is shown with reference 902 in Figure 9, and represents a standard that the switched mode power supply must achieve. It is known to use an input filter 504 in combination with the interleaved boost converter in order to ensure that the standard is satisfied. Therefore, it will be appreciated that a reduction between the required level 902 and the disturbance that is introduced by the interleaved boost converter can provide for a reduction in the components of the input filter, and therefore an improvement in the efficiency and/or physical size of the circuit as a whole.

Illustrated in Figure 9 with reference 904 is the performance of a 400 W interleaved boost converter, with zero time delay between the operation of the first and second switches. The maximum disturbance level for this interleaved boost converter is at about 112 dB uV.

Also shown in Figure 9, with reference 906, is the performance of a prior art single 200 W boost converter, which has a peak disturbance level of about 106 dB uV.

Finally, data representative of the performance of a 400 W interleaved boost converter with a time difference of two microseconds between operation of the switches is shown with reference 908. This represents an embodiment of the invention. It can be seen that the peak disturbance value for the interleaved boost converter with a time delay of 2 microseconds is about 104 dB uV, which is lower than the other data that is shown in Figure 9.

The measurement that was performed in order to obtain the results shown in Figure 9 is based on a similar interleaved boost converter to that described with reference to Figure 6. However, in obtaining the results for Figure 9 it was not possible to perform a measurement with the determined optimal value of 3.3 microseconds for the time delay between operation of the switches. Nonetheless, it can be seen that using a sub-optimal time delay of 2 microseconds provides already an improvement in the performance of the interleaved boost converter when compared with the prior art.

One or more embodiments disclosed herein relate to the idea that the size of an input filter 504 can be reduced, when compared with the prior art, by introducing a fixed time delay between operation of the individual switches of an interleaved boost converter. It will be appreciated that the principles that are described and illustrated with reference to an interleaved boost converter with two boost converters, can be extended to any number of parallel boost converters. In some examples, implementation of a controller for such an interleaved boost converter can be considered as more simple than the prior art, as the specific switching frequency of a boost converter does not influence the delay between operating the individual switches of the parallel boost converters.

There may be provided an interleaved PFC according to embodiments of the invention, whereby the controller is configured to effectively deactivate one or more PFC stages, such as boost cells, (for example by not providing a control signal to the switch of the boost cell) in accordance with the required output power level of the switched mode power supply. For example, the controller can determine the required output power by detecting an operational parameter value of the SMPS such as one or more of the "time-on" property of the switch, a "time-off" property of the switch, and/or a peak current value through the inductor or transistor/switch, as non-limiting examples. When it is determined that the SMPS is operating at part-load, for example the required output power is less than a threshold value, the controller may be configured to deactivate one or more of the boost cells. Such embodiments can lead to an improved efficiency of the SMPS because in some embodiments, operating a plurality of boost cells at part-load can be less efficient than operating fewer boost cells at higher load.

In some embodiments, the controller can be configured to change which of the boost cells are deactivated over time, for example by alternating the use of two boost cells. This can lead to a decrease in the thermal stress experienced by each of the boost cells, thereby leading to an improved lifetime of the components, for example.

In other examples, the plurality of boost cells can be configured such that they have an optimum efficiency at different output power levels. For example, two boost cells can have respective optimum efficiencies at 25% and 50% of the maximum output power. In such examples, a single boost cell can be used (and the other boost cell deactivated) if the total output power is 25% or 50% of the rated power, and both boost converters can be used together if the total output power is 75% of the rated power, or greater. Such embodiments can take advantage of local efficiency maximums that occur at specific total output power ratings.

It will be appreciated that one or more embodiments disclosed herein that relate to deactivating a PFC stage do not necessarily require the functionality of applying a fixed period of time between switching operations as required by other embodiments disclosed herein.

One or more embodiments disclosed herein may be suitable for use in any application that uses a power factor correction (PFC) circuit. For example, applications that have volume constraints such as in a personal computer (PC) or for a flat screen television/monitor where the power supply is located behind the panel, may particularly benefit from embodiments of the invention.

A specific application that is suitable for one or more embodiments of the invention is the PC market. Desktop PC's have requirements for efficiency (such as the 80plus program), and the server power supply market requires high power ratings and a need for high efficiency. The high efficiency may also be required over a wideload range, and embodiments that utilise the dynamic deactivation/switching-off of boost cells/phases can be particularly advantageous in such embodiments.

## Claims

1. A power factor correction stage comprising:
an input terminal configured to receive an input signal;
an output terminal configured to provide an output signal;
a first converter stage (510) and one or more further converter stages (512), wherein each of the converter stages (510, 512) is connected to the input terminal and the output terminal, and each converter state (510, 512) comprises a switch (522, 524); and
a controller (528) configured to operate the switches (522, 524) of the converter stages (510, 512);
wherein the controller (528) is configured to operate the switch (524) of the one or more further converter stages (512) at a period of time after operation of the switch (522) of the first converter stage (510), wherein the period of time is independent of the switching frequency of the first converter stage (510).

2. The power factor correction stage of claim 1, wherein the controller (528) is configured to operate the first converter stage (510) in a variable switching frequency mode of operation.

3. The power factor correction stage of claim 2, wherein the controller (528) is configured to operate the first converter stage (510) in a boundary conduction mode of operation.

4. The power factor correction stage claim 3, wherein the converter stages comprise boost converters.

5. The power factor correction stage of any preceding claim, wherein the controller (528) is configured to operate the switch (522) of the first converter stage (510) in accordance with a required output level.

6. The power factor correction stage of any preceding claim, wherein the first converter stage (510) and one or more further converter stages (512) are interleaved converter stages.

7. The power factor correction stage of any preceding claim, wherein the controller (528) is configured to deactivate one or more of the converter stages (510, 512) if the required output level falls below a threshold value.

8. The power factor correction stage of claim 7, wherein the converter stages (510, 512) are configured for performance at specific power output levels, and the controller (528) is configured to deactivate a specific one or more of the converter stages (510, 512) in accordance with a comparison between a required output level and the performance of the converter stages at specific power levels.

9. A switched mode power supply comprising the power factor correction stage of any preceding claim.

10. The switched mode power supply of any claim 9, further comprising an electromagnetic interference filter (504).

11. An integrated circuit comprising the control functionality of the power factor correction stage of any one of claims 1 to 8, or the switched mode power supply of claim 9 or claim 10.

12. A method of operating an interleaved power factor correction stage, the method comprising:
operating a switch (522) of a first converter stage (510); and
operating a switch (524) of one or more further converter stages (512) at a period of time after operation of the switch (522) of the first converter (510) , wherein the period of time is independent of the switching frequency of the first converter stage (510).

13. The method of claim 12, wherein operating the switch (522) of the first converter stage (510) comprises:
operating the switch (522) of the first converter stage (510) such that the combined output of the first converter stage (510) and the one or more further converter stages (512) provides a required output level.

14. The method of claim 12 or claim 13, further comprising deactivating one or more of the further converter stages (512) if a required output level falls below a threshold value.

15. A computer program, which when run on a computer, causes the computer to configure the power factor correction stage of any one of claims 1 to 8, or to configure the switched mode power supply of claim 9 or claim 10, or to configure the integrated circuit of claim 11, or to perform the method of any one of claims 12 to claim 14.
